# FASCICULE DE BREVET EUROPEEN

(11) **EP 0 437 410 B1**
(45) Date de publication et mention de la délivrance du brevet: **23.04.1997**
(21) Numéro de dépôt: 91420004.3
(22) Date de dépôt: 07.01.1991
(51) Int. Cl.: G06F 5/06, H04L 25/36

(54) **Doubleur/diviseur d'un flux de bits série**
Gerät zur Verdopplung/Halbierung einer seriellen Bitfolgefrequenz
Device for doubling/halving the rate of a serial bitstream

(30) Priorité: 09.01.1990 FR 9000403
(43) Date de publication de la demande: 17.07.1991
(73) Titulaire: SGS-THOMSON MICROELECTRONICS S.A., 94250 Gentilly (FR)
(72) Inventeur: Chaisemartin, Philippe, F-38190 Brignoud (FR); Kritter, Sylvain, F-38000 Grenoble (FR)
(74) Mandataire: de Beaumont, Michel

(56) Documents cités:
- US-A- 3 135 947
- US-A- 4 028 666

## Description

La présente invention concerne un dispositif permettant, à partir d'un flux de bits série arrivant à une première fréquence d'horloge, de transformer chaque mot contenu dans ce flux de bits en un mot dont les bits arrivent à une fréquence double, la durée restante étant occupée par des bits de remplissage. Inversement, le dispositif selon la présente invention permet à partir d'un flux de bits arrivant à une fréquence donnée, de sélectionner la moitié de ces bits et de les transmettre à fréquence moitié.

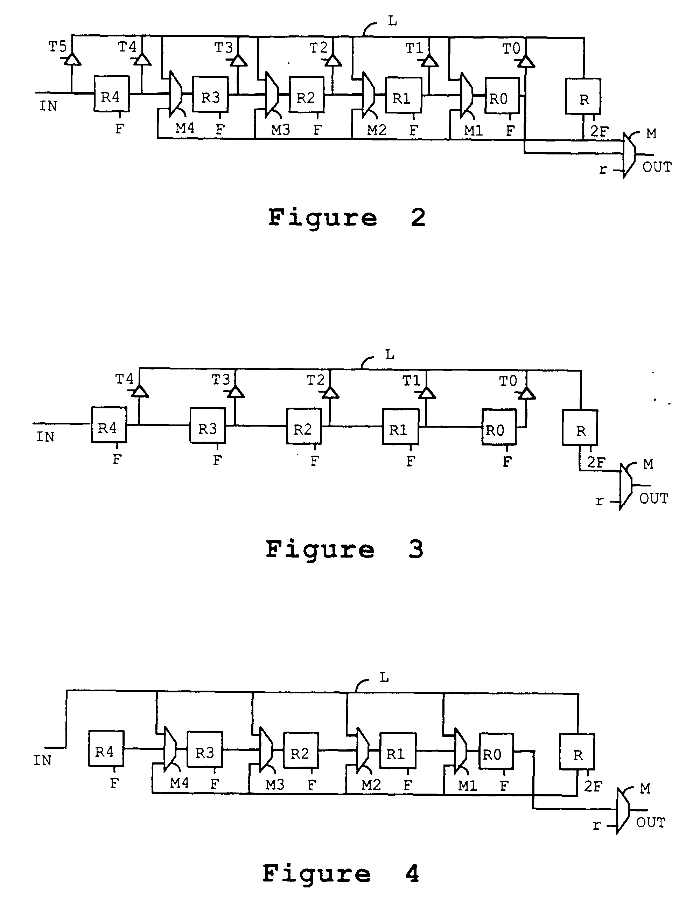

La figure 1 illustre la fonction que doit réaliser un doubleur dans le cas de mots de 8 bits. Etant donné un mot D_{F} faisant partie d'un flux de mots successifs, et dans lequel chaque bit d0 ... d7 arrive à la fréquence d'une horloge F, on veut obtenir un mot D_{2F} comprenant deux fois plus de bits, ici 16, dans lequel les bits arrivent au rythme d'une horloge 2F. On retrouve donc dans le mot D_{2F} les bits d0 à d7 et des bits de remplissage r0 à r7.

Il est souvent utile de réaliser cette opération de doublage du nombre de bits pour permettre la réalisation d'opérations avec une plus grande précision. Une fois les opérations effectuées, on reprend le mot D_{2F} les 8 bits les plus significatifs et on les retransforme en un mot D_{F} dans un dispositif diviseur.

Un objet de la présente invention est de prévoir un dispositif unique pouvant fonctionner ou bien comme doubleur ou bien comme diviseur.

Pour atteindre cet objet, la présente invention prévoit un dispositif de doublement/division par 2 de la cadence d'un flux de bits série comprenant une succession de premiers registres d'un bit actionnés à une fréquence F ; un deuxième registre actionné à la fréquence 2F ; une borne d'entrée reliée à l'entrée du premier des premiers registres et, par l'intermédiaire d'une première porte, à une ligne interne connectée à l'entrée du deuxième registre ; des premiers multiplexeurs reliés à l'entrée de chacun du deuxième au dernier des premiers registres et permettant de sélectionner la sortie du registre précédant, la ligne interne, ou bien la sortie du deuxième registre ; un deuxième multiplexeur dont la sortie correspond à la sortie du dispositif et qui permet de sélectionner ou bien la sortie du dernier des premiers registres, ou bien la sortie du deuxième registre, ou bien des bits de remplissage ; des deuxièmes portes de transfert entre la sortie de chacun des premiers registres et la ligne interne ; et des moyens de commande des diverses portes et multiplexeurs opérant selon le mode de fonctionnement choisi entre doublement ou division par 2 de la cadence du flux de bits série.

Dans un fonctionnement en doubleur, la première porte est inhibée et l'entrée en permanence appliquée au premier des premiers registres ; chacun des premiers multiplexeurs est conditionné pour connecter en permanence la sortie de chacun des premiers registres au premier registre suivant ; le multiplexeur de sortie est commandé pour fournir alternativement une succession de bits de remplissage pendant la première moitié de la durée de transmission d'un mot puis la succession des sorties du deuxième registre ; et chacune des deuxièmes portes de transfert est actionnée de sorte que la dernière porte est d'abord rendue passante une fois, les portes suivantes rendues passantes deux fois successivement et la dernière porte rendue passante une fois.

Dans un fonctionnement en diviseur, la première porte est validée pour connecter en permanence la borne d'entrée à l'entrée du registre à fréquence double ; les deuxièmes portes sont inhibées ; la sortie du dernier des premiers registres est constamment connectée par le multiplexeur de sortie à la borne de sortie ; et les premiers multiplexeurs sont séquentiellement commandés pour envoyer l'une ou l'autre de leurs entrées, dans un ordre prédéterminé, à chacun des premiers registres.

Ces objets, caractéristiques et avantages ainsi que d'autres de la présente invention seront expliqués plus en détail dans la description suivante de modes de réalisation particuliers faite en relation avec les figures jointes parmi lesquelles :
la figure 1, décrite précédement, illustre la fonction que vise à remplir un dispositif selon la présente invention ;
la figure 2 représente schématiquement un mode de réalisation d'un dispositif selon la présente invention ;
la figure 3 représente le dispositif de la figure 2 dans sa fonction de doubleur ;
la figure 4 représente le dispositif de la figure 2 dans sa fonction de diviseur ; et
les figures 5 et 6 sont des chronogrammes destinés à expliquer le fonctionnement du dispositif selon la présente invention, respectivement en doubleur et en diviseur.

Dans la description qui va suivre, on se référera seulement à un dispositif de traitement de mots de 8 bits. Il sera clair que la présente invention s'applique plus généralement quel que soit le nombre de bits des mots à traiter.

La figure 2 représente le schéma d'ensemble d'un dispositif selon la présente invention. Ce dispositif comprend 5 registres R4 à R0 fonctionnant à la fréquence F et un registre R fonctionnant à la fréquence 2F. Le registre R4 est connecté à la borne d'entrée IN du circuit. Les registres R3, R2, R1 et R0 sont connectés à la sortie de multiplexeurs M4, M3, M2 et M1 qui permettent de sélectionner l'une ou l'autre de trois entrées à savoir une ligne interne L, la sortie du registre précédent, ou la sortie du registre R. La ligne interne L est connectée à l'entrée du registre R et peut recevoir une entrée ou bien de la borne IN par l'intermédiaire d'une porte T5 ou bien de la sortie de l'un des registres R4 à R0 par l'intermédiaire de portes T4 à T0. Un multiplexeur M permet de fournir comme sortie au circuit ou bien la sortie du registre R, ou bien la sortie du registre R0 ou bien des bits de remplissage r.

Les portes T0 à T5 sont en fait des amplificateurs à trois états, couramment désignées dans la technique par l'appellation "buffer à trois états". Ce sont des dispositifs pouvant fournir à leur sortie (vers la ligne interne L) ou bien une reproduction remise à niveau du signal d'entrée, ou bien un état ouvert selon qu'ils sont validés ou non.

### DOUBLEUR

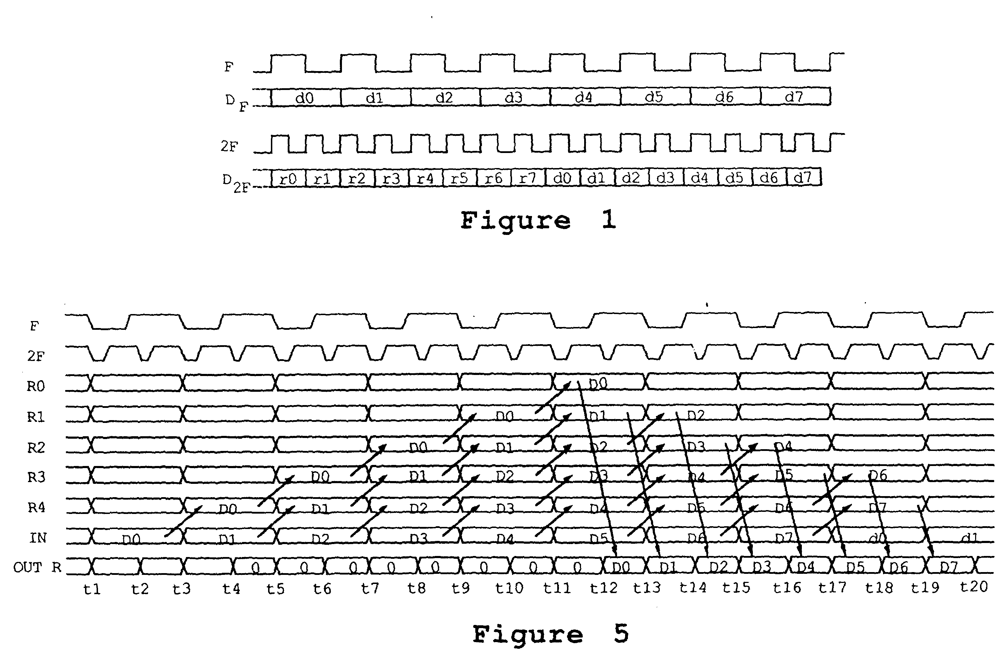

Le fonctionnement en doubleur de ce circuit va être exposé en relation avec les figures 3 et 5. La figure 3 reprend la figure 2 sauf que les portes qui se trouvent être constamment fermées sont remplacées par de simples courts-circuits et celles qui sont constamment ouvertes sont supprimées. De même les multiplexeurs qui sont toujours orientés sur la même entrée sont remplacés par des courts-cicuits.

Dans la configuration de la figure 3, les multiplexeurs M1 à M4 sélectionnent en permanence la sortie du registre qui les précède, c'est-à-dire que les données passent successivement dans les registres R4 à R0 qui forment un registre à décalage classique, et la porte T5 est constamment inhibée.

On va considérer la façon dont un mot de données comprenant des bits d0 à d7 est transformé par le circuit de la figure 3. En figure 5, on a désigné par t1, t2, t3... des instants successifs correspondants aux périodes de l'horloge à la fréquence 2F. La référence à un instant donné concerne en fait la période de l'horloge 2F qui suit cet instant.

A l'instant t1, le premier bit d0 arrive sur l'entrée IN. A l'instant t3, il est placé dans le registre R4.

A l'instant t4, le multiplexeur M est connecté sur son entrée de bits de remplissage et des bits de remplissage successifs, par exemple des 0, sont fournis à la sortie OUT. Ensuite, les bits d'entrée se décalent régulièrement dans les registres R4 à R0 au rythme de l'horloge F.

A l'instant t11, les registres R4 à R0 contiennent donc les bits d4 à d0, respectivement. C'est à partir de cet instant que l'on effectue des transferts à partir des registres à vitesse lente R4 à R0 vers le registre R et la sortie OUT du multiplexeur M. A l'instant t11, la porte T0 est fermée et le contenu d0 du registre R0 est transféré vers la ligne interne L et le registre à fréquence double R. Simultanément, le multiplexeur M est commandé pour diriger la sortie du registre R vers la borne OUT. A l'instant t12, c'est la porte de transfert T1 qui est fermée et le contenu du registre R1 est transféré vers la ligne L. A l'instant t13, le registre R1 se charge de la donnée d2 qui est immédiatement transférée par une nouvelle fermeture de la porte T1 vers la ligne L, le registre R et la sortie.

On ferme ainsi séquentiellement les portes de transfert T0, T1 et T1 comme cela a été indiqué puis les portes de transfert T2, T2, T3, T3 et T4 et l'on arrive comme le montre la figure 5, à l'instant t18, au transfert du bit d7 vers la sortie. On notera qu'à partir de l'instant t19, le registre R4 reçoit le premier bit du mot suivant qui est arrivé sur l'entrée IN à l'instant t17.

Dans l'exemple précédent, les bits de remplissage étaient systématiquement des zéros. On pourra aussi utiliser systématiquement des 1 ou bien encore faire une extension du signe de bit, c'est-à-dire répéter sur toute la durée des bits de remplissage le bit de signe qui est généralement, quand il en est prévu un, le bit de poids le plus fort d'un mot de données. On pourra également insérer un mot prédéterminé ou un mot provenant d'un autre flux de données.

D'autre part, on a indiqué dans l'exemple illustré en figure 5 la prévision de bits de remplissage avant les bits du mot de données. Etant donné que le fonctionnement du dispositif est séquentiel, on pourra inversement prévoir dans le mot à fréquence double d'abord les bits de données, ensuite les bits de remplissage.

### DIVISEUR

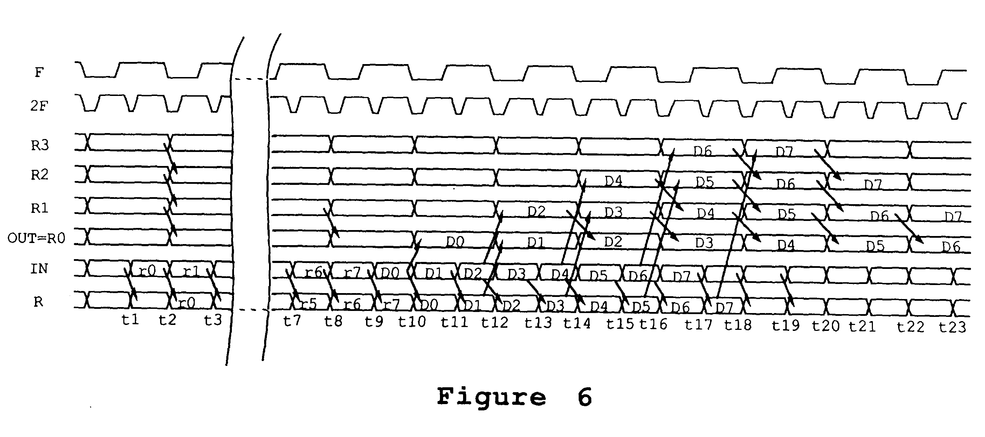

Les figures 4 et 6 illustrent le cas où le dispositif selon la présente invention est utilisé en diviseur par 2 de la fréquence d'apparition des bits.

En ce cas, la porte T5 fonctionne toujours en amplificateur, et les portes T0 à T4 sont toujours ouvertes. Ainsi, l'entrée IN est constamment appliquée au registre R. Le registre R4 ne fonctionne pas. La sortie du registre R est sélectivement connectable à l'entrée de l'un des registres R3 à R0, de même que la ligne interne L, les registres R2 à R0 pouvant en outre recevoir la sortie du registre précédent. Le multiplexeur M fournit sur la borne de sortie OUT la sortie du registre R0. Avec ce circuit, on voit que l'on peut introduire dans chacun des registres R2 à R0 le contenu du registre précédent ou la sortie du registre R ou le contenu de la ligne interne L par une sélection convenable des multiplexeurs M4 à M1.

En considérant que le mot d'entrée à 16 bits à la fréquence 2F comprend d'abord successivement des bits r0 à r7 que l'on veut rejeter puis des bits D0 à D7 que l'on veut transmettre à la fréquence moitié, on bloque dans un premier temps, entre les instants t0 et t9, la transmission entre la sortie du registre R et les registres R3 à R0 et les sorties du registre R sont perdues.

Quand, à l'instant t9, le bit d0 arrive sur l'entrée IN, il est directement transmis par le multiplexeur M1 de la ligne interne L au registre R0 et fourni en sortie.

A l'instant t10, le bit D1 arrive et est fourni au registre R.

A l'instant t11, le bit D2 arrive et est transmis directement au registre R1 par le multiplexeur M2 tandis que le bit D1 contenu dans le registre R est transmis au registre R0 et est fourni en sortie.

A l'instant t12, le bit D3 arrive et est fourni au registre R.

A l'instant t13, le bit D4 arrive. Il est envoyé vers le registre R et vers le registre R2 par le multiplexeur M3, tandis que le bit D3 contenu dans le registre R est envoyé au registre R1. Simultanément, le multiplexeur M1 transmet le contenu du registre R1 vers le registre R0 et de là vers la sortie.

A l'instant t14, le bit D5 arrive et est envoyé au registre R.

A l'instant t15, le bit D6 arrive et est envoyé au registre R3 par le multiplexeur M4 tandis que le bit D5 contenu dans le registre R est envoyé par le multiplexeur M3 au registre R2 et que les multiplexeurs M2 et M1 assurent la transmission du bit D4 contenu dans le registre R2 vers le registre R1 et du bit D3 contenu dans le registre R1 vers le registre R0 et la sortie.

A l'instant t16 arrive le dernier bit D7 du mot, qui est transmis au registre R.

A partir de l'instant t17, le contenu du registre R, D7, est envoyé au registre R3 tandis que les contenus des registres R3, R2 et R1 sont décalés vers les registres R2, R1 et R0. Par décalages successifs des registres R3, R2, R1 et R0, on obtient ainsi séquentiellement en sortie les bits D4, D5, D6, D7.

Si l'on reprend le cheminement décrit et que l'on considère le contenu successif du registre R0 entre les instants t10 et t24 sur la figure 6, on voit que l'on a bien émis séquentiellement les bits D0 à D7 à la fréquence F.

Pour simplifier les explications, on a considéré ici seulement les transformations que subit un mot de 16 bits particulier. Il est clair que ce mot de 16 bits fait partie d'une séquence de mots et que les opérations se répètent régulièrement, sans temps mort pour chacun des mots. Des flèches sur la figure 6 indiquent les transferts effectués sur les mots précédent et suivant tandis que l'on traite le mot considéré.

Bien entendu, ce qui précède ne constitue qu'un exemple de réalisation très schématique de la présente invention. L'homme de l'art saura réaliser dans une technologie de circuit intégré, par exemple en technologie CMOS, des multiplexeurs, des portes de transfert et des registres d'une case.

D'autre part, on a expliqué le fonctionnement du système en indiquant le séquencement des commandes qui doivent être appliquées aux portes de transfert et aux multiplexeurs. La réalisation d'un circuit logique réalisant ces fonctions et fournissant ces ordres successifs sera simple pour l'homme de l'art qui pourra d'ailleurs mémoriser à l'avance les séquences d'instructions à appliquer aux divers éléments dans une mémoire ou un réseau logique programmable, de façon connue.

Parmi les avantages de la présente invention, on peut noter que le dispositif décrit a l'avantage de pouvoir fonctionner ou bien en diviseur ou bien en doubleur selon son mode de commande et qu'il est simple à mettre en oeuvre puisqu'il est totalement modulaire en fonction du nombre de bits des données.

Un calcul montre que si le nombre de données à doubler est égal à N, le nombre de registres doit être égal à 2+(N/2) si N est pair et à 2+[(N-1)/2] si N est impair.

## Revendications

1. Dispositif de doublement/division par 2 de la cadence d'un flux de bits série, caractérisé en ce qu'il comprend :
une succession de premiers registres d'un bit (R4 à R0) actionnés à une fréquence F,
un deuxième registre (R) actionné à la fréquence 2F,
une borne d'entrée (IN) reliée à l'entrée du premier (R4) des premiers registres et, par l'intermédiaire d'une première porte (T5), à une ligne interne (L) connectée à l'entrée du deuxième registre,
des premiers multiplexeurs (M4 à M1) reliés à l'entrée de chacun du deuxième (R3) au dernier (R0) des premiers registres et permettant de sélectionner ou bien la sortie du registre précédent, ou bien la ligne interne, ou bien la sortie du deuxième registre,
un deuxième multiplexeur (M) dont la sortie correspond à la sortie du dispositif et qui permet de sélectionner ou bien la sortie du dernier (R0) des premiers registres, ou bien la sortie du deuxième registre, ou bien des bits de remplissage,
des deuxième portes de transfert (T4 à T0) entre la sortie de chacun des premiers registres et la ligne interne, et
des moyens de commmande des diverses portes et multiplexeurs opérant selon le mode de fonctionnement choisi entre doublement ou division par 2 de la cadence du flux de bits série.

2. Dispositif selon la revendication 1, connecté en doubleur, caractérisé en ce que :
la première porte (T5) est inhibée et l'entrée est en permanence appliquée au premier (R4) des premiers registres,
chacun des multiplexeurs (M4 à M1) est conditionné pour connecter en permanence la sortie de chacun des premiers registres au premier registre suivant,
le multiplexeur de sortie (M) est commandé pour fournir alternativement une succession de bits de remplissage pendant la première moitié de la durée de transmission d'un mot puis la succession des sorties du deuxième registre (R), et
chacune des deuxièmes portes de transfert (T4 à T0) est actionnée de sorte que la dernière porte (T0) est d'abord rendue passante une fois, les portes suivantes rendues passantes deux fois successivement et la dernière porte rendue passante une fois.

3. Dispositif selon la revendication 1, connecté en diviseur, caractérisé en ce que :
la première porte (T5) est validée pour connecter en permanence la borne d'entrée (IN) à l'entrée du registre à fréquence double (R),
les deuxièmes portes (T4 à T0) sont inhibées,
la sortie du dernier (R0) des premiers registres est constamment connectée par le multiplexeur de sortie (M) à la borne de sortie (OUT),
les multiplexeurs (M4 à M1) sont séquentiellement commandés pour envoyer l'une ou l'autre de leurs entrées, dans un ordre prédéterminé, à chacun des premiers registres (R3 à R0).

## Patentansprüche

1. Vorrichtung zum Verdoppeln/Halbieren der Rate einer seriellen Bitfolge,
dadurch gekennzeichnet, daß sie umfaßt:
- eine Aufeinanderfolge erster, mit einer Frequenz (F) betätigter Ein-Bit-Register (R4 bis R0),
- ein mit der Frequenz (2F) betätigtes Register (R),
- einen Eingangsanschluß (IN), der mit dem Eingang des ersten (R4) der ersten Register und über ein erstes Gatter (T5) mit einer mit dem Eingang des zweiten Registers verbundenen internen Leitung (L) verbunden ist,
- erste Multiplexer (M4 bis M1), die mit dem Eingang jeweils jedes des zweiten (R3) bis letzten (R0) der ersten Register verbunden sind und entweder den Ausgang des vorhergehenden Registers, oder die interne Leitung, oder den Ausgang des zweiten Registers auszuwählen gestatten,
- einen zweiten Multiplexer (M), dessen Ausgang dem Ausgang der Vorrichtung entspricht und der entweder den Ausgang des letzten (R0) der ersten Register, oder den Ausgang des zweiten Registers, oder Füllbits zu wählen gestattet,
- zweite Übertragungs-Gatter (T4 bis T0) zwischen dem Ausgang jedes der ersten Register und der internen Leitung, sowie
- Steuermittel für die verschiedenen Gatter und Multiplexer, welche gemäß dem gewünschten Betriebsmode zwischen einer Verdoppelung und einer Halbierung der Serienbitrate arbeiten.

2. Vorrichtung nach Anspruch 1, in Schaltung als Verdoppler,
dadurch gekennzeichnet, daß
- das erste Gatter (T5) gesperrt ist und die Eingangsgröße dauerhaft dem ersten (R4) der ersten Register zugeführt wird,
- jeder der Multiplexer (M4 bis M1) jeweils so konditioniert ist, daß er ständig den Ausgang jedes der ersten Register mit dem nächstfolgenden ersten Register verbindet,
- der Ausgangsmultiplexer (M) so gesteuert ist, daß er abwechselnd eine Folge von Füllbits während der ersten Hälfte der Übertragungsdauer eines Worts und sodann die Folge der Ausgangsgrößen des zweiten Registers (R) abgibt, und
- jedes der zweiten Übertragungs-Gatter (T4 bis T0) jeweils so betätigt wird, daß das letzte Gatter (T0) zuerst einmal leitend gemacht wird, die folgenden Gatter aufeinanderfolgend zweimal leitend gemacht und das letzte Gatter einmal leitend gemacht wird.

3. Vorrichtung nach Anspruch 1, in Schaltung als Bitraten-Teiler bzw. -Halbierer,
dadurch gekennzeichnet, daß
- das erste Gatter (T5) so aktiviert bzw. eingeschaltet ist, daß es den Eingangsanschluß (IN) ständig mit dem Eingang des Registers mit doppelter Frequenz (R) verbindet,
- die zweiten Gatter (T4 bis T0) gesperrt sind,
- der Ausgang des letzten (R0) der ersten Register ständig über den Ausgangsmultiplexer (M) mit dem Ausgangsanschluß (OUT) verbunden ist,
- die Multiplexer (M4 bis M1) sequentiell so gesteuert sind, daß sie die eine oder die andere ihrer Eingangsgrößen in einer vorgegebenen Ordnung jedem der ersten Register (R3 bis R0) zuführen.

## Claims

1. A device for doubling or dividing by 2 the rate of serial bits, characterized in that it comprises:
a succession of first one-bit registers (R4-R0) actuated at a frequency F,
a second register (R) actuated at a frequency 2F,
an input terminal (IN) connected to the input of the first (R4) among said first registers and, through a first gate (T5), to an internal line (L) connected to the input of said second register,
first multiplexers (M4-M1) respectively connected to the input of each (R3-R0) of said first registers for selecting either the output of the preceding register, or said internal line, or the output of said second register,
a second multiplexer (M), the output of which corresponds to the device output and which selects either the output of the last (R0) among said first registers, or the output of the second register, or filling bits,
second transfer gates (T4-T0) between the output of each first register and said internal line, and
means for controlling the various gates and multiplexers operating according to the desired operating mode between doubling and division by two of the series bit rate.

2. A device according to claim 1, connected as a doubler, characterized in that:
said first gate (T5) is inhibited and the input is constantly applied to the first among said first register (R4) of said first registers,
each first multiplexer (M4-M1) is designed to constantly connect the output of each first register to the following first register,
said second multiplexer (M) is controlled for alternatively supplying a succession of filling bits during the first half period of a word transmission duration, then the succession of outputs of said second register (R), and
each second transfer gate (T4-T0) is actuated so that the last (T0) among said second gates is first rendered conductive once, the following gates among said second gates rendered conductive twice, successively, and the last among said second gates rendered conductive once.

3. A device according to claim 1, connected as a divider, characterized in that :
said first gate (T5) is enabled for constantly connecting the input terminal (IN) to the input of said second register (R),
the second gates (T4-T0) are inhibited,
the output of the last (R0) among the first registers is constantly connected through said second multiplexer (M) to the output terminal (OUT),
said first multiplexers (M4-M1) are sequentially controlled for sending either of their inputs, in a predetermined order, to each first register (R3-R0).
